# EUROPEAN PATENT SPECIFICATION

(11) **EP 3 036 381 B1**
(45) Date of publication and mention of the grant of the patent: **13.03.2019**
(21) Application number: 14758317.3
(22) Date of filing: 21.08.2014
(51) Int. Cl.: E02F 9/08, B60R 3/02

(54) **CATWALK OF CONSTRUCTION MACHINE**
GALERIE FÜR EINE BAUMASCHINE
PASSERELLE D'ENGIN DE CONSTRUCTION

(30) Priority: 22.08.2013 JP 2013172075
(43) Date of publication of application: 29.06.2016
(73) Proprietor: Caterpillar SARL, 1208 Geneva (CH)
(72) Inventor: SHIMIZU, Kunitomo, Setagaya-ku Tokyo 158-8530 (JP); AKAHANE, Eiji, Setagaya-ku Tokyo 158-8530 (JP); AKIZUKI, Tomohiro, Setagaya-ku Tokyo 158-8530 (JP)
(74) Representative: BRP Renaud & Partner mbB Rechtsanwälte Patentanwälte Steuerberater
(86) International application number: PCT/EP2014/067837
(87) International publication number: WO 2015/025002

(56) References cited:
- WO-A1-2015/007893
- JP-A- 2000 303 500
- JP-A- 2013 064 232
- JP-A- 2013 064 239
- KR-A- 20110 046 856
- US-A- 3 891 261

## Description

### TECHNICAL FIELD

The present invention relates to a catwalk as a path for an inspection work that is provided in a construction machine having an upper slewing body.

### BACKGROUND ART

A construction machine having an upper slewing body, such as a hydraulic shovel, for example, has a large vehicle height in case of a large machine type. Because, an inspection work and the like of devices arranged in the upper slewing body is difficult to be performed from the ground, a catwalk as a path for the inspection work is provided on a side surface of the upper slewing body (see JP 2006-45853, for example).

Because the catwalk is provided on the side surface of the upper slewing body, when the upper slewing body has been slewed, an operator can consciously avoid a collision against an obstacle at a side higher than the catwalk. However, a longitudinal end part of the catwalk at the back of the operator at the outermost side of slewing is occasionally damaged due to contact against an obstacle such as a mound of excavated soil at the side. Further, there has been a problem in that, because of deformation due to the damage, a service door on the side surface of the upper slewing body cannot be opened and the inspection work and the like of devices inside the door cannot be performed.

Techniques for solving this problem are being developed. For example, there is a technique for fitting a whole catwalk turnably upward from a horizontal posture so that the whole catwalk is turned upward when the catwalk has been contacted to the obstacle (see JP 2000-303500 A).

As another example of a technique, a rear portion of the catwalk is set storable in the catwalk that is fixedly set at a front portion of the vehicle so that the rear portion is stored to prevent contact against the obstacle at the slewing work time, and the rear portion is returned to a non-stored position at the inspection work time (see JP H5-179676 A).

WO 2015/007893 A discloses a catwalk for construction machine in which catwalks are installed on both sides of construction machine. Catwalks are symmetrical. The catwalk which is installed along the side of upper swing structure of construction machine has a movable portion at most outer end from swing center. The movable portion is installed around axis which locates near the side of swing structure, and is installed to rotate between horizontal and upper positions.

### DISCLOSURE OF THE INVENTION

These improved catwalks have further problems that are desired to be solved, as follows.

According to the structure of fitting the whole of the catwalk turnably upward from the horizontal posture, the fitting bracket (the portion of 6 in FIG. 2 of JP 2000-303500 A) is greatly hollowed out to avoid the turning locus of the tread surface plate (the portion of 3b in JP 2000-303500 A) at the inner side from the turning center. Therefore, when the treading plate surface at the inner side from the turning center is trod, the catwalk is turned and unstable. And also because it is difficult to secure rigidity of the bracket due to the hollowing out, the bracket is susceptible to damage and deformation. When there is a larger difference between the height of the outer end (the portion of 3a in FIG. 2 of JP 2000-303500 A) that is brought into contact with the obstacle and the height of the turning center, reactive force of the obstacle becomes force that causes the catwalk to be turned. When the difference is larger, the hollowing out of the bracket becomes large and susceptible to damage and deformation. In a mode of fixedly holding the catwalk at a much higher turning position, it becomes troublesome to return the whole to the original at the time of using the catwalk.

The technique for storing a part of the catwalk in the fixed catwalk has a risk that the catwalk is damaged by contact with the obstacle, when the storing of the part of the catwalk is missed. Further, the structure becomes complex, and manufacturing cost becomes high. When the stored portion is damaged by soil and the like, the storing or taking out the rear portion becomes difficult.

The present invention has been made in view of the above. A technical subject of the invention is to provide a catwalk of a construction machine that can effectively prevent damage of the catwalk due to contact against an obstacle at a slewing time, that can prepare a stable working path, that has a simple structure, and that can be easily handled.

In accordance with the present invention, a catwalk as set forth in claim 1 is provided. Further embodiments of the invention are inter alia claimed in the dependent claims. For example, according to the present invention, a catwalk of a construction machine that achieves the above technical subject is provided, the catwalk being a path that is set to extend along a side surface of an upper slewing body of a construction machine having the upper slewing body, and the catwalk including comprising: an outer flip-up portion that is fitted turnably between a horizontal position and an upper position around a first axial line which is positioned at a side of the side surface of the upper slewing body, and that has an outer path surface formed outside the side surface above the first axial line; and an inner flip-up portion that is fitted turnably between a horizontal position and an upper position around a second axial line which is extended above and parallel to the first axial line, that forms an inner path surface which is positioned between the outer path surface and the side surface substantially in the same plane with the outer path surface, and that is pushed upward by upward turning of the outer flip-up portion, wherein the inner path surface has substantially the same axial line direction length as that of the outer path surface.

The inner flip-up portion has contacting members that are extended in the second axial line direction and that have arc-shaped cross sections which are brought into contact with the outer flip-up portion, at an outer end part separated from the side surface.

Further, the second axial line is formed by hinges for turnably fitting the inner flip-up portion.

The outer flip-up portion includes a bumper as a buffer member that is fitted obliquely downward, at an outer end part separated from the side surface of the outer path surface.

The outer flip-up portion is fitted onto the first axial line via elastic bearings.

Further, the catwalk includes the outer flip-up portion and the inner flip-up portion, at an outermost-side end part of the catwalk in a radial direction from a slewing center of the upper slewing body.

The catwalk of a construction machine configured according to the present invention includes: an outer flip-up portion that is fitted turnably between the horizontal position and the upper position around a first axial line which is positioned at a side of the side surface of the upper slewing body, and that has an outer path surface outside the side surface above the first axial line; and an inner flip-up portion that is fitted turnably between the horizontal position and the upper position around a second axial line extended above the first axial line parallel to the first axial line by having an inner path surface substantially in plane with the outer path surface, and that is pushed upward by upward turning of the outer flip-up portion.

Therefore, based on the inclusion of the outer flip-up portion that has the outer path surface and is fitted turnably between the horizontal position and the upper position, and the inner flip-up portion that has the inner path surface substantially in plane with the outer path surface and that is pushed upward by upward turning of the outer flip-up portion, the outer flip-up portion and the inner flip-up portion flip upward when the outer flip-up portion and the inner flip-up portion are brought into contact with an obstacle. Because damage can be effectively prevented, and further because the inner flip-up portion is provided, stable path surfaces that do not require the hollowing out of supporting frames can be prepared. Further, the structure is simple and can be easily handled because the structure is not a storage structure.

### BRIEF DESCRIPTION OF THE DRAWINGS

FIG. 1 (a) is a side view of a hydraulic shovel as a representative example of a construction machine that includes a catwalk which is configured following the present invention, FIG. 1(b) is a plain view observed in a direction of an arrow A in FIG. 1(a), and FIG. 1(c) is a rear view of a catwalk portion observed in a direction of an arrow B in FIG. 1(a).
FIG. 2 is an enlarged view of the portion in FIG. 1(c).
FIG. 3 is an enlarged view of the catwalk portion indicated by C in FIG. 1(b).
FIG. 4 is a detailed view of an outer flip-up portion in FIG. 3.
FIG. 5 is a detailed view of an inner flip-up portion in FIG. 3.
FIG. 6 is a perspective view of supporting frame in FIG. 2.
FIG. 7 is an enlarged sectional view of a bearing part of the outer flip-up portion observed in a direction of an arrow D-D in FIG. 2.
FIG. 8 is a rear view of the catwalk shown in FIG. 3.

### BEST MODE FOR CARRYING OUT THE INVENTION

Hereinafter, a catwalk of a construction machine configured following the present invention will be described in further detail with reference to the attached drawings that show a preferred embodiment of a hydraulic shovel as a representative construction machine having an upper slewing body.

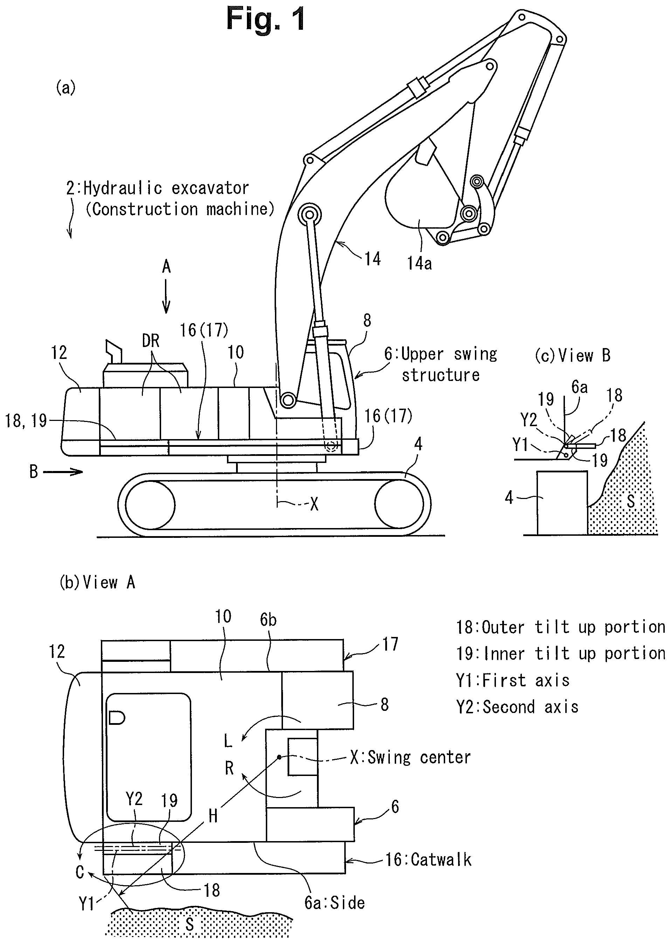

Descriptions will be made with reference to FIG. 1. A hydraulic shovel of which a whole is indicated by a reference numeral 2 includes a lower traveling body 4, and an upper slewing body 6 that is slewably fitted around an axial line X as a slewing center that is extended vertically above the lower traveling body 4. The upper slewing body 6 includes an operation room 8 in the front (a right end in FIG. 1(a)), an engine room 10 that houses devices such as an engine at the rear of the operation room 8, and a counterweight 12 at the rear end of the engine room 10. A multi-joint working arm device 14 having a bucket 14a is attached to the front side.

The operator operates an operating device in the operation room 8, and controls traveling of the lower traveling body 4, slewing (a right direction indicated by an arrow R and a left direction indicated by an arrow L) of the upper slewing body 6, and an operation of the working arm device 14, and achieves the operation.

On a right side surface 6a and a left side surface 6b of the upper slewing body 6, there are provided a plurality of openable doors DR for performing maintenance and inspection of the devices in the engine room 10 and the like. Catwalks 16 and 17 as paths that are used when performing the maintenance and inspection work of the devices by opening the doors DR are set by being extended forward and backward along the side surfaces 6a and 6b, on the side surfaces 6a and 6b of the upper slewing body 6.

The catwalks 16 and 17 have symmetrical and basically same structures. Therefore, details of the catwalks according to the present invention will be described based on the right side catwalk 16.

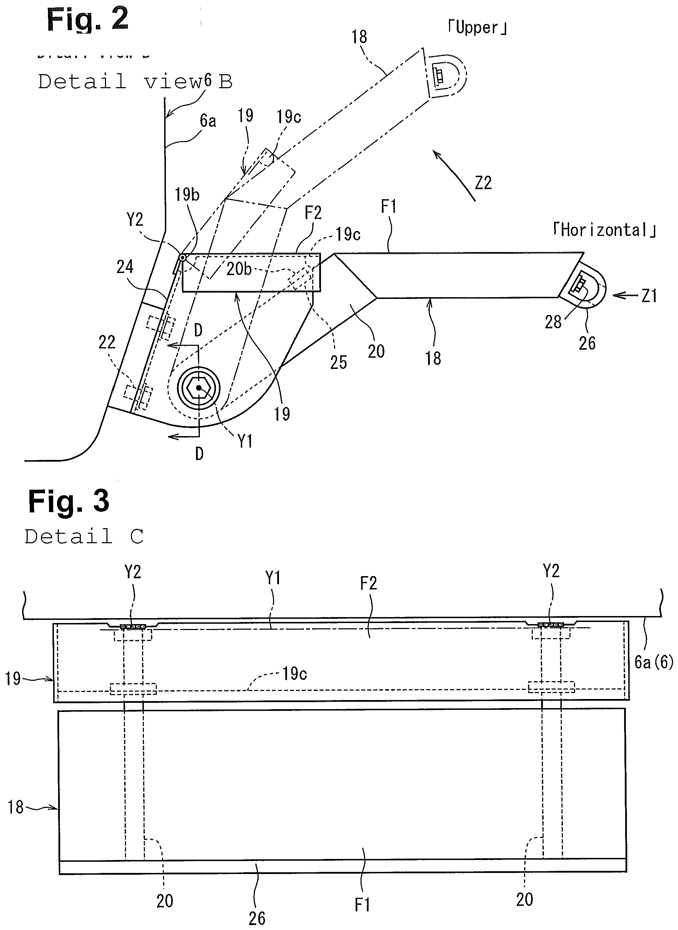

Descriptions will be made with reference to FIGS. 1, 2, and 3. At a rear end part of the operation room 8 that is at the outermost side (an arrow H) in a radial direction from the slewing center X of the upper slewing body 6 of the catwalk 16, there are provided an outer flip-up portion 18 that is fitted turnably between the horizontal position and the upper position around a first axial line Y1 which is positioned at a side of the side surface 6a of the upper slewing body 6, and that has an outer path surface F1 formed outside the side surface 6a above the first axial line Y1; and an inner flip-up portion 19 that is fitted turnably between the horizontal position and the upper position around a second axial line Y2 which is extended above the first axial line Y1 parallel to the first axial line Y1, that forms an inner path surface F2 which is positioned between the outer path surface F1 and the side surface 6a by having substantially the same surface and the same axial line direction length as those of the outer path surface F1, and that is pushed upward by upward turning of the outer flip-up portion 18 (the "horizon" is indicated by a solid line, and the "above" is indicated by a two-dot chain line, in FIG. 2 and FIG. 1(c)).

On the outer path surface F1 and the inner path surface F2, there are fitted steel plates that are formed with known slip stoppers such as a plurality of star projections (details are not shown).

The outer flip-up portion 18 and the inner flip-up portion 19 in the present embodiment are provided in the rear end part of the catwalk 16, at the rear of the operation room 8 that is at the outermost side H in the radial direction from the slewing center X of the upper slewing body 6. When the front end part becomes at the outermost side of the slewing radius, the outer flip-up portion 18 and the inner flip-up portion 19 may be provided in the front end part. Alternatively, the outer flip-up portion 18 and the inner flip-up portion 19 may be provided over a total length of the catwalk 16.

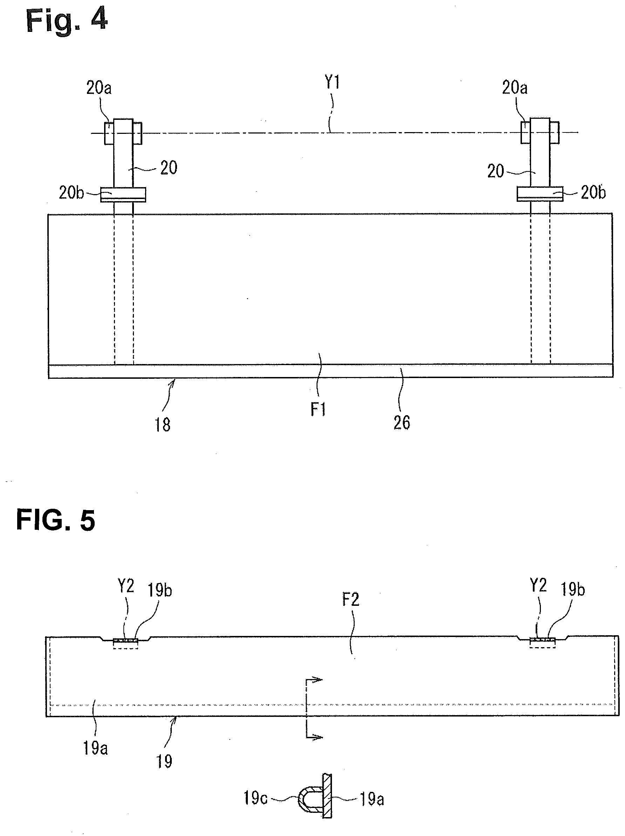

The outer flip-up portion 18 will be described with reference to FIGS. 2, 3, and 4, mainly FIG. 4. The outer flip-up portion 18 includes two arms 20 having an interval in a longitudinal direction (a left and right direction in FIG. 4). The axial line Y1 as the turning center of the outer flip-up portion 18 is positioned below the path surface F1 (FIG. 2). The arms 20 are formed in a "mount shape", extended outer upward from the axial line Y1, and are extended horizontally along the path surface F1.

Hollow bosses 20a, each formed at each one end of each arm 20, are fitted, forming the axial line Y1, to supporting frames 24 that are fitted to the side surface 6a of the upper slewing body 6 with a plurality of bolts 22. At the other end sides of the arms 20, the outer path surface F1 in a rectangle is formed to which the arms 20 are connected.

A "horizon" position (indicated by the solid line in FIG. 2) of the path surface F1 of the outer flip-up portion 18 is defined by a feature in which stopper plates 20b, which are held in the arms 20, are brought into contact with stoppers 25, which are included in the supporting frames 24 (the supporting frames 24 and the stoppers 25 will be described in detail later).

The contact state may be held by a unit that can be manually removed such as an elastic rubber latch (not shown).

The outer end part which is separated from the side surface 6a of the outer path surface F1 includes a bumper 26 as a buffer member that is fully extended in the longitudinal direction (the left and right direction in FIG. 4, and the direction perpendicular to the paper surface of FIG. 2) of the outer flip-up portion 18 and is fitted obliquely downward. The bumper 26 is formed by a synthetic rubber in a thick cylindrical shape that has a cross section of a closed U-shaped opening part. A straight line portion of the U-shaped closed opening part is fitted to an obliquely downward surface of the outer end part, with a plurality of bolts 28 (five in the example) that are inserted from a hole that is formed in a U-shaped arc portion.

In this way, the outer flip-up portion 18 is fitted to be able to be turned and flipped up between the "horizon" (indicated by the solid line in FIG. 2) and the "above" (indicated by the two-dot chain line in FIG. 2) around the axial line Y1.

The inner flip-up portion 19 will be described with reference to FIGS. 2, 3, and 5, mainly FIG. 5. The inner flip-up portion 19 includes a pair of hinges 19b that form the second axial line Y2 and that are fitted with an interval, turnably on the long side of the side surface 6a side of a rectangular body 19a which forms the inner path surface F2. The hinges 19b are fitted respectively to the pair of supporting frames 24. The hinges 19b are positioned with substantially the same interval as that of the pair of arms 20 of the outer flip-up portion 18.

The inner flip-up portion 19 includes contacting members 19c having arc shaped cross sections that are extended to a direction of the second axial line Y2 and are brought into contact with the outer flip-up portion 19, on a long-side rear surface at the opposite side of the hinges 19b of the body 19a. Both end parts in the longitudinal direction of the inner path surface F2 that has substantially the same axial line direction length as that of the outer path surface F1 are formed to stride over both end parts in the longitudinal direction of the outer flip-up portion 18 at the time of turning between the "horizontal position" and the "upper position".

The inner path surface F2 that is substantially in plane with the outer path surface F1 of the inner flip-up portion 19 has the "horizon" position (indicated by the solid line in FIG. 2) defined by the fitting position of the hinges 19b to the supporting frames 24 and by the contacting of the body 19a against the upper ends of the supporting frames 24. When the outer flip-up portion 18 is turned upward, the arms 20 are brought into contact with the contacting members 19c, and are pushed upward to be turned between the "horizontal position" and the "upper position" around the axial line Y2. In this case, because the contacting members 19c have the arc-shaped cross sections, the outer flip-up portion 18 is smoothly flipped up, without being caught by the slip stoppers (not shown) such as the star projections of the outer path surface F1 of the outer flip-up portion 18.

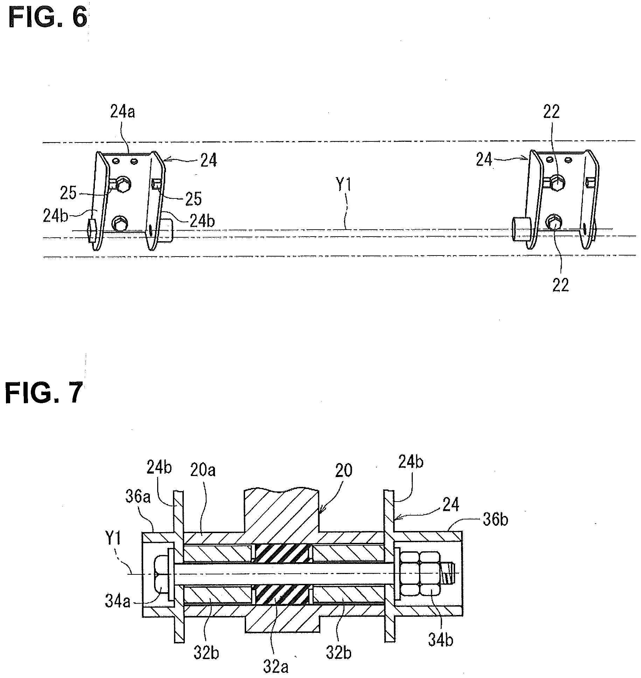

The supporting frames 24 will be described with reference to FIGS. 2 and 6. Each supporting frame 24 includes a base plate part 24a and a pair of vertical plate parts 24b at both sides of the base plate part 24a, by bending a steel plate in a channel shape. The base plate part 24a is fitted to the side surface 6a of the upper slewing body 6 with bolts 22. The upper end part of the base plate part 24a is formed with bolt holes for fitting the hinges 19b of the inner flip-up portion 19. On the upper ends of the pair of vertical plate parts 24b, the body 19a of the inner flip-up portion 19 is mounted and is positioned.

The pair of vertical plate parts 24b include stoppers 25 to which the stopper plates 20b provided in the arms 20 of the outer flip-up portions 18 are contacted. The lower ends of the pair of vertical plate parts 24b are respectively formed with bearing parts for forming the axial line Y1.

The bearing parts will be described with reference to FIGS. 2, 6, and 7, mainly FIG. 7. The bosses 20a of the arms 20 of the outer flip-up portion 18 are fitted to the axial line Y1 via the elastic bearings on the supporting frames 24.

That is, the bosses 20a are positioned between the vertical plate parts 24b of the supporting frames 24. Each boss 20a includes a cylindrical elastic bearing 32a that is sandwiched and inserted into between a pair of spacers 32b. Each arm 20 is fitted to the supporting frame 24, with a bolt 34a that is passed through the supporting frame 24 and the elastic bearing 32a and that forms the axial line Y1, and with double nuts 34b of the other end of the bolt 34a.

The head part of the bolt 34a and the front screw parts and the nuts 34b are protected from damages from the outside, by cylindrical covers 36a and 36b that are formed respectively in the vertical plate parts 24b of the supporting frame 24.

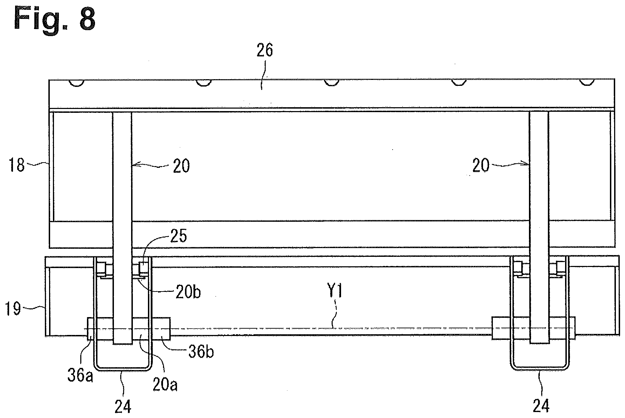

A state that the outer flip-up portion 18 and the inner flip-up portion 19 are observed from a lower rear side in the supporting frames 24 will be described with reference to FIG. 8.

The bosses 20a as the turning centers of the arms 20 of the outer flip-up portion 18 are supported in the respective supporting frames 24. The stopper plate 20b of the arm 20 that defines the "horizon" position of the outer flip-up portion 18 and the stopper 25 of the supporting frame 24 are positioned in the supporting frame 24. Therefore, the turning center of the arm 20, the positioning stopper, and the like are not easily susceptible to damages by an external obstacle such as soil.

A case where the outer flip-up portion 18 is in contact with an obstacle will be described next with reference to FIGS. 1 and 2. When the upper slewing body 6 is turned to the left direction indicated by the arrow L in FIG. 1(b) and when the bumper 26 of the outer flip-up portion 18 is brought into contact with the obstacle S, the reactive force indicated by an arrow Z1 in FIG. 2 from the obstacle S works to the bumper 26 of the outer flip-up portion 18. The bumper 26 that is positioned above the turning axial line Y1 and that faces downward pushes the outer flip-up portion 18 to be flipped up. The outer flip-up portion 18 is turned upward as indicated by an arrow Z2 around the axial line

Y.

The rubber latch that holds the outer flip-up portion 18 may be set to be extended according to a size of the reactive force Z1 from the obstacle. Alternatively, the rubber latch may be set to be extracted or broken.

When the outer flip-up portion 18 is turned between the "horizontal position" and the "upper position" , the arms 20 of the outer flip-up portion 18 are brought into contact with the contacting members 19c of the inner flip-up portion 19. The inner flip-up portion 19 follows the turning of the outer flip-up portion 18, and is pushed upward to be turned between the "horizontal position" and the "upper position" around the axial line Y2.

Work effects of the catwalk of a construction machine as described above will be described.

(1) Descriptions will be made with reference to FIGS. 1 and 2. The catwalk of a construction machine that is configured following the present invention includes: the outer flip-up portion 18 that is fitted turnably between the horizontal position and the upper position around the first axial line Y1 which is positioned at the side of the side surface 6a of the upper slewing body 6, and that has the outer path surface F1 outside the side surface 6a above the first axial line Y1; and the inner flip-up portion 19 that is fitted turnably between the horizontal position and the upper position by having the inner path surface F2 which is substantially in plane with the outer path surface F1, around the second axial line Y2 which is extended above the first axial line Y1 parallel to the first axial line Y1, and that is pushed upward by upward turning of the outer flip-up portion 18.

Therefore, the outer flip-up portion 18 that has the outer path surface F1 and is fitted turnably between the horizontal position and the upper position, and the inner flip-up portion 19 that has the inner path surface F2 substantially in plane with the outer path surface F1 and is pushed upward by the turning of the outer flip-up portion 18 are provided. Based on this, when the outer flip-up portion 18 and the inner flip-up portion 19 become in contact with an obstacle, the outer flip-up portion 18 and the inner flip-up portion 19 are flipped up, and can effectively prevent damages. Further, the inner flip-up portion 19 does not require the hollowing out of the conventional supporting frames, and stable path surfaces can be prepared. Further, because the structure is not a storage structure, the structure is simple, and can be handled easily.
(2) The inner path surface F2 has substantially the same axial line direction length as that of the outer path surface F1. Therefore, stable large path surfaces can be prepared by the path surfaces F1 and F2 of the same axial line direction length.
(3) The inner flip-up portion 19 has the contacting members 19c that are extended to the second axial line Y2 direction and that have arc-shaped cross sections which are brought into contact with the outer flip-up portion 18, at the outer end part separated from the side surface 6a.

Therefore, when the outer flip-up portion 18 is turned upward by being interfered by an obstacle, the inner flip-up portion 19 is pushed upward and this avoids interference with the obstacle. When the outer flip-up portion 18 is turned, the contacting members 19c having the arc-shaped cross sections cause the inner flip-up portion 19 to be turned smoothly without being caught by the slip stoppers such as the plurality of star projections on the path surface F1.
(4) The second axial line Y2 is formed by the hinges 19b for turnably fitting the inner flip-up portion 19. Therefore, it can be ensured that the conventional hollowing out of the supporting frames for the turning should be made unnecessary, and stable path surfaces can be prepared.
(5) The outer flip-up portion 18 includes the bumper 26 as a buffer member that is fitted obliquely downward, at the outer end part separated from the side surface 6a of the path surface F1. Therefore, the outer flip-up portion 18 can be easily turned upward when a load has been received from the side (Z1).
(6) As shown in FIG. 7, the outer flip-up portion 18 is fitted onto the first axial line Y1 via the elastic bearings 32a. Therefore, when the outer flip-up portion 18 has received the load, the elastic bearings 32a absorb the impact, and facilitate the outer flip-up portion 18 to be turned upward.
(7) Further, as shown in FIG. 1(b), the outer flip-up portion 18 and the inner flip-up portion 19 are provided at the end part of the catwalk 16 that is at the outermost side H in the radial direction from the slewing center X of the upper slewing body 6. Therefore, based on the provision of the flip-up portions 18 and 19 at the end part of the catwalk 16 that is easily contactable to the obstacle S at the turning time, damages when the flip-up portions 18 and 19 were contacted to the obstacle S can be effectively prevented. Further, because only the end part is flipped upward, the structure of the catwalk can be made simple, and manufacturing cost can be set low.

While the present invention has been described in detail based on the embodiment, the present invention is not limited to the above embodiment, and can be variously modified or amended as defined by the claims.

### INDUSTRIAL APPLICABILITY

In the embodiment, the construction machine is a hydraulic shovel. However, the present invention can be also applied to other construction machines having an upper slewing body such as a crane vehicle, for example.

### EXPLANATION OF REFERENCE NUMERALS

- 2: hydraulic shovel (construction machine)
- 6: upper slewing body
- 6a, 6b: side surface
- 16, 17: catwalk
- 18: outer flip-up portion
- 19: inner flip-up portion
- 19b: hinge
- 19c: contacting member
- 26: bumper
- 32a: elastic bearing
- F1: outer path surface
- F2: inner path surface
- H: outermost side
- S: obstacle
- X: axial line (slewing center)
- Y1: first axial line
- Y2: second axial line

## Claims

1. A catwalk (16, 17) of a construction machine with an upper slewing body (6), the catwalk (16, 17) being configured to be mounted to the construction machine to provide a path that is set to extend along a side surface (6a, 6b) of the upper slewing body (6),
the catwalk (16, 17) comprising:
an outer flip-up portion (18) that is fitted turnably between a horizontal position and an upper position around a first axial line (Y1) which is positioned at a side of the side surface (6a, 6b) of the upper slewing body (6), and that has an outer path surface (F1) formed outside the side surface (6a, 6b) above the first axial line (Y1); and
an inner flip-up portion (19) that is fitted turnably between a horizontal position and an upper position around a second axial line (Y2) which is extended above and parallel to the first axial line (Y1), that forms an inner path surface (F2) which is positioned between the outer path surface (F1) and the side surface (6a, 6b) substantially in the same plane with the outer path surface (F1), and that is pushed upward by upward turning of the outer flip-up portion (18), wherein
the inner path surface (F2) has substantially the same axial line direction length as that of the outer path surface (F1).

2. The catwalk (16, 17) of a construction machine according to claim 1, wherein the inner flip-up portion (19) comprises contacting members (19c) that are extended in a second axial line (Y2) direction and that have arc-shaped cross sections which are brought into contact with the outer flip-up portion (18), at an outer end part separated from the side surface (6a, 6b).

3. The catwalk (16, 17) of a construction machine according to claim 1 or 2, wherein the second axial line (Y2) is formed by hinges (19b) for turnably fitting the inner flip-up portion (19).

4. The catwalk (16, 17) of a construction machine according to any one of claims 1 to 3, wherein the outer flip-up portion (18) comprises a bumper (26) as a buffer member that is fitted obliquely downward, at an outer end part separated from the side surface (6a, 6b) of the outer path surface (F1).

5. The catwalk (16, 17) of a construction machine according to any one of claims 1 to 4, wherein the outer flip-up portion (18) is fitted onto the first axial line (Y1) via elastic bearings.

6. The catwalk (16, 17) of a construction machine according to any one of claims 1 to 5, comprising
the outer flip-up portion (18) and the inner flip-up portion (19), at an end part as an outermost-side in a radial direction from a slewing center of the upper slewing body (6).

## Patentansprüche

1. Laufsteg (16, 17) einer Baumaschine mit einem oberen Schwenkkörper (6), wobei der Laufsteg (16, 17) eingerichtet ist, um an der Baumaschine montiert zu werden, um einen Weg bereitzustellen, der gesetzt ist, um sich entlang einer seitlichen Oberfläche (6a, 6b) des oberen Schwenkkörpers (6) zu erstrecken,
wobei der Laufsteg (16,17) umfasst:
einen äußeren Hochklappbereich (18), der zwischen einer horizontalen Position und einer oberen Position um eine erste axiale Linie (Y1) kippbar gepasst ist, die an einer Seite der seitlichen Oberfläche (6a, 6b) des oberen Schwenkkörpers (6) positioniert ist, und der eine äußere Wegoberfläche (F1) aufweist, die außerhalb der seitlichen Oberfläche (6a, 6b) oberhalb der ersten axialen Linie (Y1) gebildet ist; und
einen inneren Hochklappbereich (19), der zwischen einer horizontalen Position und einer oberen Position um eine zweite axiale Linie (Y2) kippbar gepasst ist, die sich oberhalb und parallel zu der der ersten axialen Linie (Y1) erstreckt, der eine innere Wegoberfläche (F2) bildet, die zwischen der äußeren Wegoberfläche (F1) und der seitlichen Oberfläche (6a, 6b) im Wesentlichen in derselben Ebene mit der äußeren Wegoberfläche (F1) positioniert ist, und der durch nach oben Kippen des äußeren Hochklappbereichs (18), nach oben gedrückt wird, wobei
die innere Wegoberfläche (F2) im Wesentlichen dieselbe Länge in Richtung der axiale Linie aufweist wie die äußere Wegoberfläche (F1).

2. Laufsteg (16, 17) einer Baumaschine nach Anspruch 1, wobei der innere Hochklappbereich (19) Kontaktglieder (19c) umfasst, die sich in eine Richtung der zweiten axialen Linie (Y2) erstrecken und die bogenförmige Querschnitte, die in Kontakt mit dem äußeren Hochklappbereich (18) gebracht werden, an einem von der seitlichen Oberfläche (6a, 6b) getrennten äußeren Endteil aufweisen.

3. Laufsteg (16, 17) einer Baumaschine nach Anspruch 1 oder 2, wobei die zweite axiale Linie (Y2) durch Gelenke (19b) zum kippbaren Passen des inneren Hochklappbereichs (19) gebildet ist.

4. Laufsteg (16, 17) einer Baumaschine nach einem der Ansprüche 1 bis 3, wobei der äußere Hochklappbereich (18), einen Stoßfänger (26) als ein Pufferglied, das schräg nach unten gepasst ist, an einem äußeren Endteil, das von der seitlichen Oberfläche (6a, 6b) der äußeren Wegoberfläche (F1) getrennt ist, umfasst.

5. Laufsteg (16, 17) einer Baumaschine nach einem der Ansprüche 1 bis 4, wobei der äußere Hochklappbereich (18) mittels elastischer Lager auf die erste axiale Linie (Y1) gepasst ist.

6. Laufsteg (16, 17) einer Baumaschine nach einem der Ansprüche 1 bis 5, umfassend
den äußeren Hochklappbereich (18) und den inneren Hochklappbereich (19), an einem Endteil als eine äußerste Seite in einer radialen Richtung von einem Schwenkzentrum des oberen Schwenkkörpers (6).

## Revendications

1. Plate-forme (16, 17) d'une machine de construction avec un corps supérieur pivotant (6), la plate-forme (16,17) étant configurée pour être montée sur la machine de construction afin de fournir un chemin qui est défini pour s'étendre le long d'une surface latérale (6a, 6b) du corps supérieur pivotant (6),
la plate-forme (16, 17) comprenant :
une partie relevable extérieure (18) qui est ajustée de manière à pouvoir tourner entre une position horizontale et une position supérieure autour d'une première ligne axiale (Y1) qui est positionnée sur un côté de la surface latérale (6a, 6b) du corps supérieur pivotant (6), et qui a une surface de chemin extérieure (F1) formée à l'extérieur de la surface latérale (6a, 6b) au-dessus de la première ligne axiale (Y1) ; et
une partie relevable intérieure (19) qui est ajustée de manière à pouvoir tourner entre une position horizontale et une position supérieure autour d'une seconde ligne axiale (Y2) qui s'étend au-dessus de la première ligne axiale (Y1) et parallèle à celle-ci, qui forme une surface de chemin intérieure (F2) qui est positionnée entre la surface de chemin extérieure (F1) et la surface latérale (6a, 6b) sensiblement dans le même plan que la surface de chemin extérieure (F1), et qui est poussée vers le haut par une rotation vers le haut de la partie relevable extérieure (18) ; dans laquelle
la surface de chemin intérieure (F2) a sensiblement la même longueur de direction de ligne axiale que celle de la surface de chemin extérieure (F1).

2. Plate-forme (16,17) d'une machine de construction selon la revendication 1, dans laquelle la partie relevable intérieure (19) comprend des éléments de contact (19c) qui s'étendent dans une seconde direction axiale (Y2) et qui présentent des sections transversales en forme d'arc qui sont amenées en contact avec la partie relevable extérieure (18) au niveau d'une partie d'extrémité extérieure séparée de la surface latérale (6a, 6b).

3. Plate-forme (16, 17) d'une machine de construction selon la revendication 1 ou 2, dans laquelle la seconde ligne axiale (Y2) est formée par des charnières (19b) pour s'ajuster de manière à pouvoir tourner à la partie relevable intérieure (19).

4. Plate-forme (16, 17) d'une machine de construction selon l'une quelconque des revendications 1 à 3, dans laquelle la partie relevable extérieure (18) comprend un amortisseur (26) servant d'élément tampon monté obliquement vers le bas, au niveau d'une partie d'extrémité extérieure séparée de la surface latérale (6a, 6b) de la surface de chemin extérieure (F1).

5. Plate-forme (16, 17) d'une machine de construction selon l'une quelconque des revendications 1 à 4, dans laquelle la partie relevable extérieure (18) est ajustée sur la première ligne axiale (Y1) via des supports élastiques.

6. Plate-forme (16, 17) d'une machine de construction selon l'une quelconque des revendications 1 à 5, comprenant
la partie relevable extérieure (18) et la partie relevable intérieure (19), au niveau d'une partie d'extrémité en tant que côté le plus extérieur dans une direction radiale à partir du centre de pivotement du corps supérieur pivotant (6).
